# EUROPEAN PATENT SPECIFICATION

(11) **EP 4 238 750 B1**
(45) Date of publication and mention of the grant of the patent: **25.12.2024**
(21) Application number: 22159823.8
(22) Date of filing: 02.03.2022
(51) Int. Cl.: B29D 99/00, B29C 70/56, B29C 70/52, B29C 70/86, B29C 31/08, B29C 70/54

(54) **MOLD ASSEMBLY FOR MANUFACTURING A COMPOSITE PART AND RELATED METHODS**
UMFORMEINHEIT ZUR HERSTELLUNG EINES VERBUNDTEILS UND ZUGEHÖRIGE VERFAHREN
ENSEMBLE MOULE POUR LA FABRICATION D'UNE PIÈCE COMPOSITE ET PROCÉDÉS ASSOCIÉS

(43) Date of publication of application: 06.09.2023
(73) Proprietor: LM Wind Power A/S, 6000 Kolding (DK)
(72) Inventor: RAZEGHI, Rama, Eastleigh, SO53 4SE (GB)
(74) Representative: Bardehle Pagenberg S.L.

(56) References cited:
- WO-A1-2016/130235
- WO-A1-2021/214726

## Description

### FIELD

The present disclosure relates to methods and systems for manufacturing composite parts, and more particularly to methods and systems for manufacturing composite parts comprising a stack of pultruded plates and one or more fiber mats. The present disclosure further relates to and methods and systems for manufacturing a spar cap for a wind turbine blade.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly ("directly driven") or through the use of a gearbox. This way, the generator produces electricity which can be supplied to the electrical grid.

In order to extract more energy from the wind, the size of the rotor diameter is increased by increasing the dimensions of the wind turbine blades. The larger size of the blades introduces higher physical loads into the blade and related components. Wind turbine rotor blades generally comprise a body shell formed by two shell halves of a composite material, e.g. glass fiber composites. The body shell is relatively lightweight and has structural properties that are not designed to withstand all the bending moments and other loads acting on the blade during operation. To improve the structural properties of the rotor blade such as stiffness and strength, the body shell is generally reinforced with structural components, e.g. spar caps at the suction and pressure side of the blade with one or more shear webs connecting them. The spar cabs may also be called "main laminate" or "spar cap laminate" of the wind turbine blade. These terms may be used interchangeably throughout the present disclosure.

The spar caps can be manufactured using several materials such as glass fiber laminate composites and carbon fiber laminate composites. Modern spar caps may be manufactured using pultruded composites. Composites manufactured by pultrusion may have a constant cross-section that can be easily stacked to form a larger composite part. Therefore, a plurality of pultruded plates may be stacked and infused together in a mold to form a larger (i.e. longer, thicker, wider) composite part, e.g. a spar cap.

Due to the benefits of using pultrusions for the manufacture of composite parts in terms of cost and others, the industry is developing new approaches to integrate them in composite manufacturing processes. Known approaches include the placement of stacks of pultruded plates in a mold to later infuse them. However, the pultruded plates may be difficult to align with respect to each other and to the mold, and this may lead to imperfections in the final product. To mitigate the aforementioned misalignments, a considerable amount of manual labor is required, which leads to an increase in the average cost of the composite part and a reduction in the overall composite manufacture throughput.

Other approaches known in the art employ intermediate or temporary supports located in the mold to receive and hold the pultruded plates delivered by a lifting device, such as a crane or similar. Then, the temporary supports are carefully removed, and the pultruded plates are lowered to the mold. This process should be carefully done in an attempt to maintain the alignment of the pultruded plates as much as possible, which is complicated to achieve along the entire length of the pultruded plates. In the case of a wind turbine blade for example, the length of the spar cap may be more than 50 meters, more than 60 meters or even more than 80 meters long. As indicated, these approaches are prone to misalignments between pultruded plates, and also require considerable amount of manual labor to achieve a final composite product of acceptable quality. WO 2016/130235 discloses a method for manufacturing a turbine blade comprising placing a stack of pultruded plates and a fiber mat in a mold.

Accordingly, there is a need for improved methods and systems for manufacturing composite parts comprising pultruded plates that mitigates the alignment issues associated with known approaches.

The present disclosure provides examples of assemblies and methods that at least partially overcome some of the drawbacks of existing composite molds and methods for manufacturing composite parts comprising pultrusion plates.

### SUMMARY

In a first aspect, a mold assembly is provided. The mold assembly is configured for manufacturing a composite part comprising a stack of pultruded plates and a fiber mat. The mold assembly comprises a mold surface, at least one fiber mat tensioner. The mold surface defines a longitudinal direction and a transverse direction. Further, the at least one fiber mat tensioner is configured to provide tension to the fiber mat, so that the fiber mat can hold the stack of pultruded plates at a distance from the mold.

According to this first aspect, the mold assembly allows placing and aligning the pultruded plates relative to the mold surface and can considerably reduce the need for manual supervision and labor during the manufacture of a composite part. This results in an, at least partially, automatized process with high reproducibility. At the same time, it can bring down production costs and increase the production rate of composite parts. Further, the simplicity of the mold assembly allows to both, replace an existing fiber mat or install a new fiber mat, for example in situations wherein more than one stack of pultruded plates are to be placed. Besides, the need for multiple temporary supports along the length of the mold can be reduced. Further, these can be easily mounted and dismounted from the mold assembly without interfering with the alignment of the pultruded plates.

In another aspect, a method for manufacturing a composite part is provided. The composite part comprises a stack of pultruded plates and one or more fiber mats, both having a longitudinal direction and a transverse direction. The method comprises providing tension to the fiber mats, placing the stack of pultruded plates on the tensioned fiber mats, and descending the fiber mats and the stack of pultruded plates to a mold.

According to this second aspect, the method allows placing the stack of pultruded plates on top of a fiber mat or multiple fiber mats before contacting a mold. Thus, the alignment of the pultruded plates can take place away from the mold, to later descend the fiber mat and the pultruded plates down to reach the mold. The fact that the fiber mat acts as an intermediate component between the pultruded plates and the mold allows to precisely locate pultruded plates in molds of different shapes and dimensions, i.e. with a narrow inner geometry. The fiber mat can at least partially adopt the geometry of the mold while descending, and it can provide a controlled descent down to the inner surface of the mold.

Throughout this disclosure, the terms "pultruded composites", "pultruded plates", "pultrusions" or similar terms are generally used to define reinforced materials (e.g. fibers or woven or braided strands) that are impregnated with a resin and pulled through a heated die such that resin cures.

Throughout the present disclosure, the term "fiber mat" may be understood as encompassing any piece of cloth of fabric comprising fibers. The fibers may be arranged in strands or rovings. The fiber may be natural or synthetic fibers and particularly may be any type of fiber suitable for fiber reinforced composites, and more particularly may be glass fibers or carbon fibers. The fibers may have a variety of different orientations e.g. the fiber mats may be uniaxial, biaxial, multi-axial or different. The fibers may be woven with different types of weaves or may be unwoven.

### BRIEF DESCRIPTION OF THE DRAWINGS

Non-limiting examples of the present disclosure will be described in the following, with reference to the appended drawings, in which:
Figure 1 illustrates a perspective view of a wind turbine according to one example;
Figure 2A is a schematic diagram illustrating a wind turbine blade according to one example;
Figure 2B schematically illustrates an internal structure of a wind turbine blade;
Figure 2C illustrates a molding system which may be used in the manufacture of a wind turbine blade;
Figure 3 schematically illustrates a mold assembly according to one example;
Figure 4 schematically illustrates the mold assembly of figure 3 through the plane A-A' in a first configuration;
Figure 5 schematically illustrates the mold assembly of figure 3 through the plane A-A' in a second configuration;
Figure 6 is a flow diagram of a method for manufacturing a composite part according to one example;
Figure 7 is a flow diagram of another method for manufacturing a blade shell component according to one example.

### DETAILED DESCRIPTION OF EXAMPLES

Reference now will be made in detail to embodiments of the present disclosure, one or more examples of which are illustrated in the drawings. Each example is provided by way of explanation only, not as a limitation.

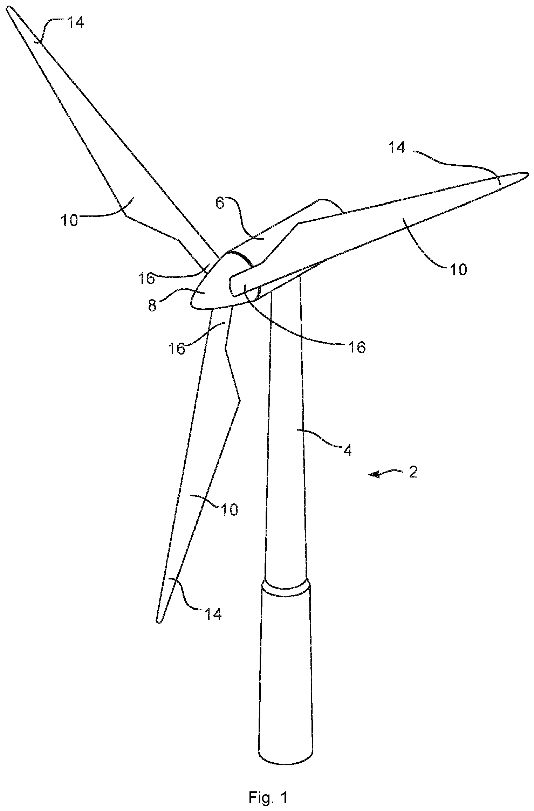

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

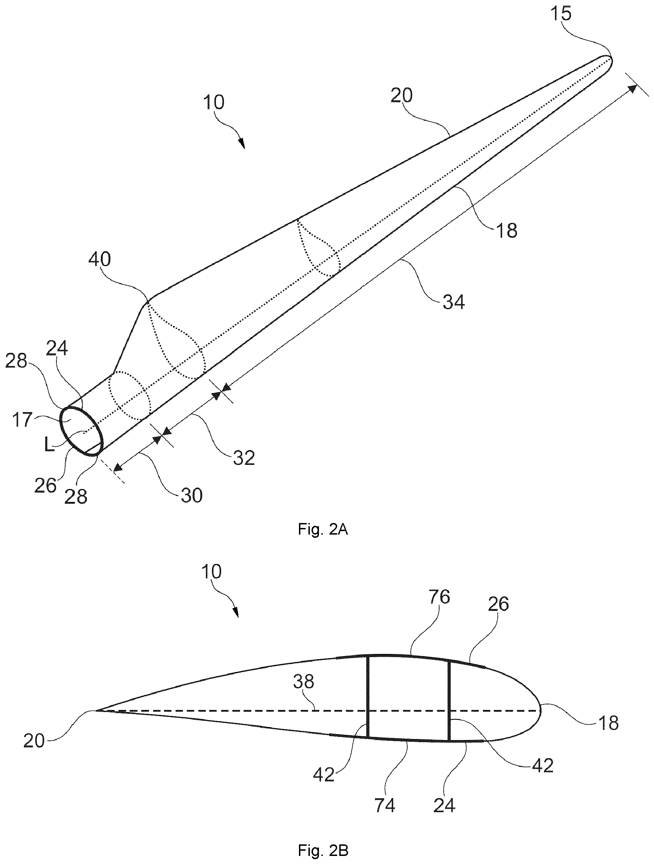

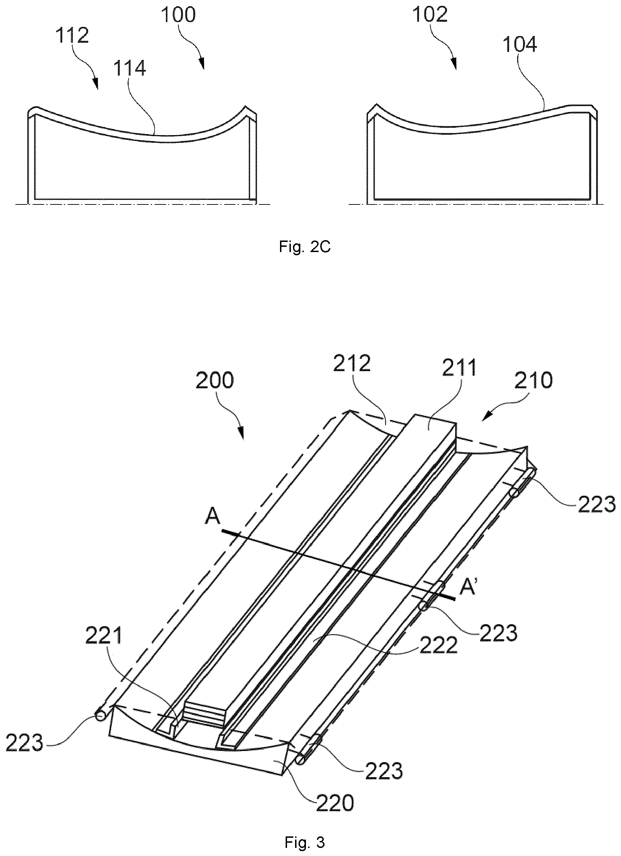

Fig. 2 shows a schematic view of an exemplary wind turbine blade 10. The wind turbine blade 10 has the shape of a conventional wind turbine blade with a root end 17 and a tip end 15 and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance r from the hub. The airfoil region 34 has an airfoil profile with a chord extending between the leading edge 18 and the trailing edge 20 of the blade 10. The width of the chord decreases with increasing distance r from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. prebent), thus providing the chord plane with a correspondingly twisted and/or curved course, this being most often the case in order to compensate for the local velocity of the blade being dependent on the radius from the hub. The wind turbine blade 10 comprises a blade shell comprising two blade shell parts or half shells, a first blade shell part 24 and a second blade shell part 26, typically made of fiber-reinforced polymer. The wind turbine blade 10 may comprise additional shell parts, such as a third shell part and/or a fourth shell part. The first blade shell part 24 is typically a pressure side or upwind blade shell part. The second blade shell part 26 is typically a suction side or downwind blade shell part. The first blade shell part 24 and the second blade shell part 26 are fastened together with adhesive, such as glue, along bond lines or glue joints 28 extending along the trailing edge 20 and the leading edge 18 of the blade 10. Typically, the root ends of the blade shell parts 24, 26 has a semi-circular or semi-oval outer cross-sectional shape.

Fig. 2B is a schematic diagram illustrating a cross sectional view of an exemplary wind turbine blade 10, e.g. a cross sectional view of the airfoil region of the wind turbine blade 10. The wind turbine blade 10 comprises a leading edge 18, a trailing edge 20, a pressure side 24, a suction side 26 a first spar cap 74, and a second spar cap 76. The wind turbine blade 10 comprises a chord line 38 between the leading edge 18 and the trailing edge 20. The wind turbine blade 10 comprises shear webs 42, such as a leading edge shear web and a trailing edge shear web. The shear webs 42 could alternatively be a spar box with spar sides, such as a trailing edge spar side and a leading edge spar side. The spar caps 74, 76 may comprise carbon fibers while the rest of the shell parts 24, 26 may comprise glass fibers.

Fig. 2C is a schematic diagram illustrating an exemplary mold system for molding a blade shell of a wind turbine blade. The mold system 100 comprises a first mold 102 and a second mold 112. The first mold 102 is configured for manufacturing a first blade shell part of a wind turbine blade, such as an upwind shell part of the wind turbine blade (forming the suction suction). The second mold 112 is configured for manufacturing a second blade shell part of the wind turbine blade, such as a downwind shell part of the wind turbine blade (forming the pressure surface).

Figure 3 schematically illustrates a top perspective view of a mold assembly 200 according to one example. The mold assembly 200 is configured for manufacturing a composite part 210 comprising a stack of pultruded plates 211 and a fiber mat 212. Note that only the edges of the fiber mat have been illustrated, and these are represented with broken lines. The mold assembly 200 comprises a mold 220 having a longitudinal direction and a transverse direction. Further, the mold assembly 200 comprises at least one fiber mat tensioner 223 configured to provide tension to the fiber mat 212 to hold the stack of pultruded plates 211 at a distance from the mold 220. In the present example, the mold assembly 200 comprises a plurality of fiber mat tensioners 223, each comprising a roller as an actuator. The roller rolls and unrolls the fiber mat and provides tension to the fiber mat 212 in the transverse direction. The rollers in figure 3 are distributed in pairs, one at each side of the mold 220. Doing so, each pair of rollers may also control the local position of the stack of pultruded plates 211 across the transverse direction; i.e. rolling the fiber mat 212 on one side while unrolling the fiber mat 212 on the other side.

In some examples, the mold assembly 200 may comprise a fiber mat tensioner 223 with other actuators such as a gripper, a plier, a chuck, or others to modify the distance of the fiber mat 212 and the stack of pultruded plates 211 to the mold 220. Besides, the fiber mat tensioner 223 may comprise a combination of actuators to provide a more versatile control of the fiber mat 212.

Further, the fiber mat tensioner 223 may also comprise one or more drives to drive and control the actuators, such as e.g. an electric motor. The drive may be configured to control the actuators independently from each other, in a synchronous manner, or all together with a single command sequence. The fiber mat rollers, or other actuators, may be distributed along the length of the mold in one or both sides of the mold. Further, the fiber mat rollers may have a substantially shorter length than length of the mold 220 or the fiber mat 212, or may extend substantially along the entire length of the mold 220. A plurality of shorter rollers may allow adjusting the descent following different sequences, if driven by an appropriate drive.

Although figure 3 illustrates an example wherein the pultruded plates are held by a single fiber mat 212, other configurations are also possible. Even though a single fiber mat 212 is shown, it should be clear that this fiber mat 212 may comprise a stack of a plurality of fiber mats.

Moreover, a plurality of fiber mats may be located across the mold 220 at different longitudinal positions along the mold. Each fiber mat may be located substantially next to each other, or they may be separated from each other at a distance. For example, the mold assembly of figure 3 may include three fiber mats, one associated with each pair of fiber mat tensioners 223. Thus, a pair of fiber mat tensioners 223 may adjust the tension of the fiber mat, and therefore distance of the pultruded plates to the mold 220, independently from the others. Further, different types of fiber mats 212 may be used at different locations due to, for example, a desired increase in stiffness of the composite part. In examples, a first fiber mat may be a biaxial fiber mat and a second fiber mat may be a triaxial fiber mat, or a first fiber mat may be a carbon fiber mat and a second fiber mat may be a glass fiber mat.

In a later production step, the pultruded plates and the one or more fiber mats may be infused with resin e.g. epoxy resin. After curing, the composite part is obtained, wherein the fiber mats form an integral part of the composite part providing strength and stiffness. The use of fiber mats (material, weight, thickness, type) may thus be optimized along the composite part.

Additionally, figure 3 also illustrates that the mold assembly 200 may further comprise at least two sidewalls 221, 222 substantially arranged in the longitudinal direction. The flanges 221, 222 may be configured to passively guide the descent of the fiber mat 212 and the stack of pultruded plates 211.

Further, the actuators of the mold assembly 200 may also comprise a clamping unit to grip and translate each end of the fiber mat 212 in the transverse direction relative to the mold 220. In these examples, the width of the fiber mat 212 (in the transverse direction) may be substantially reduced, since the clamping unit may move towards the central region of the mold 220 while descending and towards the lateral regions of the mold 220 while ascending.

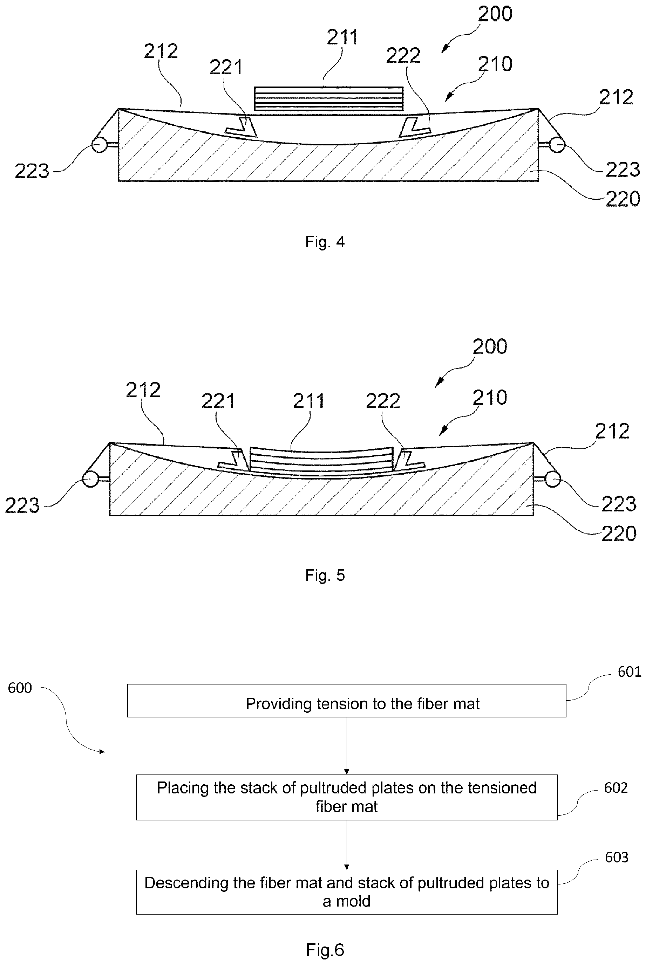

Figures 4 and 5 illustrate different moments in a process using a mold assembly according to the present invention through the plane A-A' illustrated in figure 3.

Figure 4 illustrates a mold assembly 200 further comprising a fiber mat 212 and a stack of pultruded plates 211. As previously discussed, the fiber mat 212 may be biaxial or triaxial, and the stack of pultruded plates 211 may comprise carbon fiber plates, glass fiber plates or a combination of the same.

The mold assembly 200 in figure 4 is in a first moment, wherein the fiber mat 212 has been tensioned by the fiber mat tensioners 223. This tension provided by the tensioners 223 is sufficient to withstand the weight of the stack of pultruded plates 211 above the mold 220 at a given distance from the same. Once it is verified that the pultruded plates 211 are aligned, the fiber mat tensioners 233, may adjust the tension provided to start the descent of the fiber mat 212 and pultruded plates 211. In the illustrated example, this may be achieved by unrolling the actuators. If the actuators are unrolled at the same rate, the pultruded plates 211 will descend substantially vertically down to the mold. This considerably reduces the risk of misalignment during the lay-up process and, consequently, it reduces the manual labor required.

The mold assembly 200 in figure 5 is in a second moment, wherein the fiber mat 212 has been at least partially released from the fiber mat tensioners 233. In this configuration, the stack of pultruded plates 211 are already resting on the mold 220, with a fiber mat 212 as an intermediate layer. During the descent, the flanges 221, 222 may be used as a reference to guide the pultruded plates 211.

The mold assembly 200 in figures 3-5 may be configured for manufacturing a wind turbine blade shell component comprising a spar cap and a fiber mat 212.

Even though in all the depicted examples, the pultruded plates 211 are shown as thin, wide, and long plates, which are stacked on top of each other, it is noted that this is done for illustration purposes only. I.e. in any of the depicted examples, a single pultruded plate 211 may in reality comprise a plurality of plates (or "strips") next to each other.

Figure 6 is a flow diagram of an example of a method 600 for manufacturing a composite part. The composite part comprises a stack of pultruded plates 211 and a fiber mat 212, and both the stack of pultruded plates 211 and the fiber mat 212 have a longitudinal direction and a transverse direction. In particular, figure 6 shows that the method 600 comprises, at block 601, providing tension to the fiber mat 212. Further, the method 600, at block 602, comprises placing the stack of pultruded plates 211 on the tensioned fiber mat 212. Besides, the method 600 also comprises, at block 603, descending the fiber mat 212 and stack of pultruded plates 211 to a mold 220.

According to this aspect, the method 600 allows to place the stack of pultruded plates 211 on an intermediate layer, i.e. the fiber mat 212. The fiber mat 212 allows positioning the stack of pultruded plates with lifting equipment, and considerably reducing dimensional restrictions. Thus, once the stack of pultruded plates 211 are received and held by the fiber mat 212, both the fiber mat 212 and the stack of pultruded plates 211 can descend down to the mold 220. Again, since the fiber mat 212 can at least partially adopt the geometry of the mold 220, misalignments during the descent are considerably reduced.

In some examples, providing tension to the fiber mat 212 may be carried out by pulling the fiber mat 212 over the mold 220, either directly against the lateral edges of the mold 220 or against a guide, i.e. sidewall, placed in the mold 220.

In examples, the method 600 may also comprise infusing the fiber mat 212 and stack of pultruded plates 211 with resin. To infuse the resin, vacuum may be used, e.g. in a VARTM process (Vacuum Assisted Resin Transfer Molding). A vacuum bag may be used.

Additionally, the method 600 may also include aligning the stack of pultruded plates 211 between at least two sidewalls located in the mold 220. The sidewalls may form part of the mold for a subsequent resin infusion. Alignment may be done by an actuator such as a roller, a chuck, a gripper or other. In case of having rolling elements, the alignment of the stack of pultruded plates 211 may be achieved by adjusting the rolling and unrolling rates of the rolling elements, as previously discussed in relation to the mold assembly 200. In alternative examples, the rollers may be used as guiding devices, i.e. the tension is applied by an actuator, and one or more rollers are used to guide the fiber mat over the mold.

If other actuators such as grippers are used, the actuators may translate the fiber mat 212, and pultrusion plates 211 on it, along the transverse direction of the mold 220. Therefore, in examples, descending the fiber mat 212 and stack of pultruded plates 211 may comprise at least partially releasing the fiber mat 212 from a fiber mat holder.

The method 600 may also comprise trimming the fiber mat 212 along the longitudinal direction. Trimming may be carried out manually by qualified operators, semi-automatically or in a fully automatized process. Additionally, the trimming operation may be done prior to infusing the fiber mat 212 and stack of pultruded plates 211 with resin.

In some examples, alternatively or additionally to the trimming, the method 600 may comprise folding the extra width of the fiber mat 212 on top of the stack of pultruded plates 211.

In some examples, descending the fiber mat 212 and the stack of pultruded plates 211 comprises descending a first portion of the fiber mat 212 and the stack of pultruded plates 211 at a first point in time and descending a second portion of the fiber mat 212 and the stack of pultruded plates 211 at a second point in time. This can be achieved, for example, by assigning a descend command to an actuator (or a pair of actuators as discussed in figures 4-5), while the remaining actuators do not modify their state or modify their state at a different rate. Thus, once a portion of the fiber mat 212 is descending, a second actuator may start the descent of the associated portion of the fiber mat 212. Note that the same applies in case of having multiple fiber mats 212 distributed in different locations along the longitudinal direction of the pultrusion stack 211.

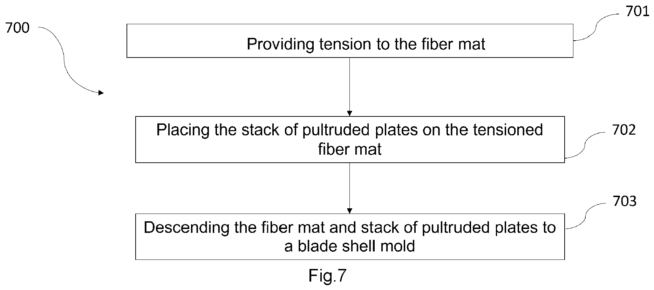

Figure 7 is a flow diagram of an example of a method 700 for manufacturing a spar cap of a wind turbine blade. The spar cap component comprises a stack of pultruded plates 211 and a fiber mat 212, and both the stack of pultruded plates 211 and the fiber mat 212 have a longitudinal direction and a transverse direction. In particular, figure 7 shows that the method 700 according to this example comprises, at block 601, providing tension to the fiber mat 212. Further, the method comprises placing the stack of pultruded plates 211 on the tensioned fiber mat 212 at block 702. The method 700 also comprises, at block 703, descending the fiber mat 212 and stack of pultruded plates 211 to a mold.

The stack of pultruded plates 211 may comprise additional layers of material such as layers of interlayer material, i.e. glass or carbon fiber fabrics, hybrid fabrics or suitable fiber veils, between pultruded plates. Additionally, the stack of pultruded plates 211 may also comprise components of a lightning protection system such as a network of conductors. Further, in some examples, an additional layer may be used to cover top, bottom and side surfaces of the stack of pultruded plates 211. This additional layer may be a biaxial glass or carbon fiber, a chop strand mat (CSM) or any other suitable material.

Note that some or all of the technical features described in relation with the mold assembly 200 can be included in the method 600 for manufacturing a composite component, and/or in the method 700 for manufacturing a blade shell component, and *vice versa.*

## Claims

1. A method (600) for manufacturing a composite part (210) comprising a stack of pultruded plates (211) and a fiber mat (212), the stack of pultruded plates (211) and the fiber mat (212) having a longitudinal direction and a transverse direction, the method (600) **characterized in** comprising:
providing (601) tension to the fiber mat (212);
placing (602) the stack of pultruded plates (211) on the tensioned fiber mat (212); and
descending (603) the fiber mat (212) and stack of pultruded plates (211) to a mold (220).

2. The method (600) according to claim 1, wherein the method (600) further comprises infusing the fiber mat (212) and the stack of pultruded plates (211) with resin.

3. The method (600) according to any of claims 1 or 2, wherein the method (600) further comprises aligning the stack of pultruded plates (211) between at least two sidewalls (221, 222) located in the mold.

4. The method (600) according to claim 3, wherein the method (600) further comprises removing the sidewalls (221, 222) located in the mold (220).

5. The method (600) according to any of claims 1 - 4, wherein descending the fiber mat (212) and stack of pultruded plates (211) comprises at least partially releasing the fiber mat (212) from a fiber mat holder (223).

6. The method (600) according to any of claims 1 - 5, wherein descending the fiber mat (212) and the stack of pultruded plates (211) comprises descending a first portion of the fiber mat (212) and the stack of pultruded plates (211) at a first point in time, and descending a second portion of the fiber mat (212) and the stack of pultruded plates (211) at a second point in time.

7. The method (600) according to any of claims 1 - 6, wherein providing tension to the fiber mat (212) is carried out by pulling the fiber mat (212) over at least two sidewalls (211, 222) located in the mold (220).

8. The method (600) according to any of claims 1 - 7, wherein the stack of pultruded plates (211) is configured to form a spar cap of a wind turbine blade (10).

9. A mold assembly (200) for manufacturing a composite part (210) comprising a stack of pultruded plates (211) and a fiber mat (212), the mold assembly (200) comprising a mold (220) having a longitudinal direction and a transverse direction, and **characterized by** at least one fiber mat tensioner (223) configured to provide tension to the fiber mat (212) to hold the stack of pultruded plates (211) at a distance from the mold (220).

10. The mold assembly (200) according to claim 9, wherein the fiber mat tensioner (223) comprises a driver and an actuator, and the fiber mat tensioner (223) is configured to selectively modify the distance of the fiber mat (212) and stack of pultruded plates (211) from the mold (220).

11. The mold assembly (200) according to claim 10, wherein the actuator comprises a clamping unit to grip and translate each end of the fiber mat (212) in the transverse direction relative to the mold (220).

12. The mold assembly (200) according to claim 11, wherein the mold assembly (200) further includes one or more sidewalls (221, 222) to guide the fiber mat (212) over the mold (220).

13. The mold assembly (200) according to any of claims 10 - 12, wherein the actuator comprises at least one fiber mat roller for rolling and unrolling fiber mat in the transverse direction.

14. The mold assembly (200) according to claim 13, wherein the driver is configured to control the fiber mat rollers of the actuator independently from each other.

15. The mold assembly (200) according to any of claims 9 - 14, wherein the mold assembly (200) further comprises at least two sidewalls (211, 222) substantially arranged in the longitudinal direction, to passively guide the descend of the fiber mat (212) and stack of pultruded plates (211).

## Patentansprüche

1. Verfahren (600) zur Herstellung eines Verbundteils (210), das einen Stapel pultrudierter Platten (211) und eine Fasermatte (212) umfasst, wobei der Stapel pultrudierter Platten (211) und die Fasermatte (212) eine Längsrichtung und eine Querrichtung aufweisen, wobei das Verfahren (600) umfasst:
Ausüben (601) von Spannung auf die Fasermatte (212);
Auflegen (602) des Stapels von pultrudierten Platten (211) auf die gespannte Fasermatte (212); und
Absenken (603) der Fasermatte (212) und des Stapels pultrudierter Platten (211) zu einer Form (220).

2. Verfahren (600) nach Anspruch 1, wobei das Verfahren (600) ferner das Infundieren der Fasermatte (212) und des Stapels von pultrudierten Platten (211) mit Harz umfasst.

3. Verfahren (600) nach einem der Ansprüche 1 oder 2, wobei das Verfahren (600) ferner das Ausrichten des Stapels von pultrudierten Platten (211) zwischen mindestens zwei in der Form angeordneten Seitenwänden (221, 222) umfasst.

4. Verfahren (600) nach Anspruch 3, wobei das Verfahren (600) ferner das Entfernen der in der Form (220) befindlichen Seitenwände (221, 222) umfasst.

5. Verfahren (600) nach einem der Ansprüche 1 bis 4, wobei das Absenken der Fasermatte (212) und des Stapels pultrudierter Platten (211) das zumindest teilweise Lösen der Fasermatte (212) von einem Fasermattenhalter (223) umfasst.

6. Verfahren (600) nach einem der Ansprüche 1 bis 5, wobei das Absenken der Fasermatte (212) und des Stapels von pultrudierten Platten (211) das Absenken eines ersten Abschnitts der Fasermatte (212) und des Stapels von pultrudierten Platten (211) zu einem ersten Zeitpunkt und das Absenken eines zweiten Abschnitts der Fasermatte (212) und des Stapels von pultrudierten Platten (211) zu einem zweiten Zeitpunkt umfasst.

7. Verfahren (600) nach einem der Ansprüche 1 bis 6, wobei die Fasermatte (212) unter Spannung gesetzt wird, indem die Fasermatte (212) über mindestens zwei in der Form (220) befindliche Seitenwände (211, 222) gezogen wird.

8. Verfahren (600) nach einem der Ansprüche 1 bis 7, wobei der Stapel aus pultrudierten Platten (211) so konfiguriert ist, dass er eine Gurte eines Windturbinenblatts (10) bildet.

9. Formanordnung (200) zum Herstellen eines Verbundteils (210), das einen Stapel pultrudierter Platten (211) und eine Fasermatte (212) umfasst, wobei die Formanordnung (200) eine Form (220) mit einer Längsrichtung und einer Querrichtung und mindestens einen Fasermattenspanner (223) umfasst, der so konfiguriert ist, dass er Spannung auf die Fasermatte (212) ausübt, um den Stapel pultrudierter Platten (211) in einem Abstand zur Form (220) zu halten.

10. Formanordnung (200) nach Anspruch 9, wobei der Fasermattenspanner (223) einen Antrieb und einen Aktuator umfasst und der Fasermattenspanner (223) so konfiguriert ist, dass er den Abstand der Fasermatte (212) und des Stapels pultrudierter Platten (211) von der Form (220) selektiv modifiziert.

11. Formanordnung (200) nach Anspruch 10, wobei der Aktuator eine Klemmeinheit umfasst, um jedes Ende der Fasermatte (212) zu ergreifen und in der Querrichtung relativ zur Form (220) zu verschieben.

12. Formanordnung (200) nach Anspruch 11, wobei die Formanordnung (200) weiterhin eine oder mehrere Seitenwände (221, 222) umfasst, um die Fasermatte (212) über die Form (220) zu führen.

13. Formanordnung (200) nach einem der Ansprüche 10 bis 12, wobei der Aktuator mindestens eine Fasermattenrolle zum Auf- und Abrollen von Fasermatten in der Querrichtung umfasst.

14. Formanordnung (200) nach Anspruch 13, wobei der Antrieb so konfiguriert ist, dass er die Fasermattenrollen des Aktuators unabhängig voneinander steuert.

15. Formanordnung (200) nach einem der Ansprüche 9 bis 14, wobei die Formanordnung (200) ferner mindestens zwei Seitenwände (211, 222) umfasst, die im Wesentlichen in der Längsrichtung angeordnet sind, um das Absenken der Fasermatte (212) und des Stapels von pultrudierten Platten (211) passiv zu führen.

## Revendications

1. Procédé (600) de fabrication d'une pièce composite (210) comprenant une pile de plaques pultrudées (211) et un matelas de fibres (212), la pile de plaques pultrudées (211) et le matelas de fibres (212) ayant une direction longitudinale et une direction transversale, le procédé (600) comprenant :
fournir (601) une tension au matelas de fibres (212) ;
placer (602) la pile de plaques pultrudées (211) sur le matelas de fibres tendues (212) ; et
descente (603) du matelas de fibres (212) et de la pile de plaques pultrudées (211) dans un moule (220).

2. Procédé (600) selon la revendication 1, dans lequel le procédé (600) comprend en outre l'infusion du matelas de fibres (212) et de la pile de plaques pultrudées (211) avec de la résine.

3. Procédé (600) selon l'une des revendications 1 ou 2, dans lequel le procédé (600) comprend en outre l'alignement de la pile de plaques pultrudées (211) entre au moins deux parois latérales (221, 222) situées dans le moule.

4. Procédé (600) selon la revendication 3, dans lequel le procédé (600) comprend en outre l'enlèvement des parois latérales (221, 222) situées dans le moule (220).

5. Procédé (600) selon l'une des revendications 1 à 4, dans lequel la descente du matelas de fibres (212) et de la pile de plaques pultrudées (211) consiste à libérer au moins partiellement le matelas de fibres (212) d'un support de matelas de fibres (223).

6. Méthode (600) selon l'une des revendications 1 à 5, dans laquelle la descente du matelas de fibres (212) et de la pile de plaques pultrudées (211) comprend la descente d'une première partie du matelas de fibres (212) et de la pile de plaques pultrudées (211) à un premier moment, et la descente d'une seconde partie du matelas de fibres (212) et de la pile de plaques pultrudées (211) à un second moment.

7. Procédé (600) selon l'une des revendications 1 à 6, dans lequel la tension du matelas de fibres (212) est obtenue en tirant le matelas de fibres (212) sur au moins deux parois latérales (211, 222) situées dans le moule (220).

8. Procédé (600) selon l'une des revendications 1 à 7, dans lequel la pile de plaques pultrudées (211) est configurée pour former une courroie d'une pale d'éolienne (10).

9. Ensemble de moule (200) pour la fabrication d'une pièce composite (210) comprenant une pile de plaques pultrudées (211) et un matelas de fibres (212), l'ensemble de moule (200) comprenant un moule (220) ayant une direction longitudinale et une direction transversale, et au moins un tendeur de matelas de fibres (223) configuré pour fournir une tension au matelas de fibres (212) afin de maintenir la pile de plaques pultrudées (211) à une certaine distance du moule (220).

10. L'ensemble de moule (200) selon la revendication 9, dans lequel le tendeur de matelas de fibres (223) comprend un entraînement et un actionneur, et le tendeur de matelas de fibres (223) est configuré pour modifier sélectivement la distance du matelas de fibres (212) et de la pile de plaques pultrudées (211) par rapport au moule (220).

11. L'ensemble de moule (200) selon la revendication 10, dans lequel l'actionneur comprend une unité de serrage pour saisir et déplacer chaque extrémité du matelas de fibres (212) dans la direction transversale par rapport au moule (220).

12. L'ensemble de moule (200) selon la revendication 11, dans lequel l'ensemble de moule (200) comprend en outre une ou plusieurs parois latérales (221, 222) pour guider le matelas de fibres (212) sur le moule (220).

13. L'ensemble de moule (200) selon l'une des revendications 10 - 12, dans lequel l'actionneur comprend au moins un rouleau de matelas de fibres pour rouler et dérouler le matelas de fibres dans la direction transversale.

14. L'ensemble de moule (200) selon la revendication 13, dans lequel l'entraînement est configuré pour contrôler les rouleaux de matelas de fibres de l'actionneur indépendamment l'un de l'autre.

15. L'ensemble de moule (200) selon l'une des revendications 9 à 14, dans lequel l'ensemble de moule (200) comprend en outre au moins deux parois latérales (211, 222) sensiblement disposées dans la direction longitudinale, pour guider passivement la descente du matelas de fibres (212) et de la pile de plaques pultrudées (211).
